# EUROPEAN PATENT SPECIFICATION

(11) **EP 3 806 578 B1**
(45) Date of publication and mention of the grant of the patent: **09.09.2026**
(21) Application number: 19202524.5
(22) Date of filing: 10.10.2019
(51) Int. Cl.: H05B 1/02, H05B 3/56, H05B 3/36, G05D 23/19, E01C 11/26

(54) **HEATING SYSTEM FOR HEATING SURFACES OF INFRASTRUCTURE**
HEIZSYSTEM FÜR HEIZOBERFLÄCHEN EINER INFRASTRUKTUR
SYSTÈME DE CHAUFFAGE POUR CHAUFFER DES SURFACES D'INFRASTRUCTURE

(43) Date of publication of application: 14.04.2021
(73) Proprietor: Snowless Ltd, Qiryat Shemona (IL)
(72) Inventor: DRÖGE, Jan Eike, 53125 Bonn (DE); HEISIG, Tobias, 56244 Niedersayn (DE); SCHIPROWSKI, Jo, 6365 BM Schinnen (NL); SMITS, René, 5481 LK Schijndel (NL); ELIMELECH DE-WOLFF, Yonatan, 1224500 Doar Naa Galil Elion (IL)
(74) Representative: Thum, Bernhard

(56) References cited:
- EP-A2- 2 290 307
- EP-A2- 3 070 569
- CN-A- 106 638 225
- CN-A- 108 755 340
- CN-B- 103 243 628
- JP-A- 2008 007 936
- US-A1- 2006 191 903
- US-A1- 2006 289 000
- US-A1- 2016 355 997
- US-A1- 2017 245 325

## Description

The present invention relates to a heating system for heating surfaces of infrastructure and a method for installing at least one heating ribbon.

It is an object of the present invention to provide a heating system for heating surfaces of infrastructure, which allows a fast response to the heating demand of the surface to be heated and an energy efficient operation.

CN 106 638 225 A discloses a snow melting ice system including a power supply unit, a control unit and a heating unit. The control unit comprises an electronic programmable controller and a switch unit. The system further comprises a ground
temperature sensor and an atmospheric temperature sensor, an ice and snow detector. The sensors are connected to the electronic programmable controller. The
heating unit has a heating zone, which is an amorphous alloy heating tape for outdoor use, and the amorphous alloy heating tape is laid on the asphalt pavement or the lower surface of the cement road surface. Based on the sensor readings, the controller activates or deactivates the heating unit.

Furthermore, EP 2 290 307 and EP 3 070 569 disclose heaters which are relevant to the present invention.

This object is solved by a heating system for heating surfaces having the features of claim 1.

Further embodiments are indicated in the attached dependent claims.

The present invention relates to a heating system for heating surfaces, in particular asphalt or concrete surfaces. The heating system comprises:
at least one heating ribbon, wherein the heating ribbon comprises at least one heating element for generating radiant heat, wherein the at least one heating element is made of an amorphous material,
at least one power supply for supplying power to the at least one heating ribbon,
at least one sensor unit for sensing at least one environmental characteristic and/or at least one characteristic of at least one zone of the surface to be heated with the heating system,
at least one control unit that is configured to determine the heating demand of at least one zone of the surface to be heated based on the at least one characteristic sensed by the at least one sensor unit, wherein the at least one control unit is configured to control the at least one power supply based on the determined heating demand of the at least one zone of the surface to be heated,
wherein the at least one power supply unit comprises at least one power modulation unit configured to control the amount of power supplied to at least one section of the at least one heating ribbon.

The heating system according to the present invention allows to determine in real time the heating requirements of a surface to be heated. The at least one control unit is configured to process different inputted data for determining the heating requirements the surface to be heated. The at least one control unit is configured to initiate power supply to the at least one heating ribbon based on the inputted data. The at least one control unit is configured to use real-time data inputs to initiate modifications of the power supply to the at least one heating ribbon if changes of the heating requirements are determined based on the inputted data. Since the at least one heating ribbon is able to generate radiant heat immediately upon power supply, the heating system can rapidly react on any changes in the environment of the heating system. By doing so, the energy consumption of the heating system can be further lowered based on the "on demand" heating provided by the present invention.

The heating system is configured for heating surfaces of infrastructure. Such surfaces to be heated may be found on traffic routes (roads), car parks, parking lots, airports (runways, taxiways), company premises, railway station areas, concrete traffic routes, concrete structures (such as bridges) and the like. In the following, the term "infrastructure" is used in this regard.

The at least one power supply unit comprises the at least one power modulation unit configured to control the amount of power supplied to the at least one heating ribbon. The at least one power modulation unit is responsible for powering the at least one heating element of the heating ribbon with the precise amount of power in order to reach the desired surface temperature in the at least one zone of the surface to be heated. The power modulation unit can provide fast and infinitely variable proportional control of electric power. The power modulation unit may allow to power the at least one heating ribbon with any value between 0%-100% of the maximum power of the heating ribbon. The supply of power, i.e. the supply of electric current to the heating ribbon, may be continuously and steplessly controllable by the at least one power modulation unit. Moreover, the at least one power modulation unit allows that different areas or zones of the surface to be heated provided with at least one heating ribbon can be heated differently, i.e. at least one zone of the surface to be heated may require no heating whereas other zones of the surface to be heated may require substantial heating. Accordingly, with the power modulation unit, the heating of at least one zone of the surface to be heated can be controlled in real time according to the heating requirements of the surface to be heated. The at least one power modulation unit enables substantial power reduction as different zones of the surface to be heated require different thermal energy input according to the determined real-time characteristics.

The heating system comprises the at least one sensing unit. The control unit may be connected or may be connectable to at least one sensor unit for sensing at least one environmental characteristic and/or at least one characteristic of the surface to be heated with the heating system. The at least one sensor unit is configured to determine environmental characteristics and/or characteristics of the surface to be heated. This may be done in real time. The at least one sensor unit may comprise at least one sensor for sensing at least one characteristic of the surface to be heated. The at least one sensor unit may be comprise at least one temperature sensor for sensing the temperature of the surface to be heated. The temperature of the entire surface may be mapped with the at least one temperature sensor of the heating system. The temperature of the entire surface to be heated may be detected in real time, which allows the control unit to control the heating of the surface by means of the heating ribbon with high resolution and precision. The at least one sensor unit may be comprise at least one temperature for sensing the temperature of the air or the surroundings of the surface to be heated. Based on the temperature of the air or the surroundings of the surface to be heated and the temperature of at least one zone of the surface to be heated, it may be possible to provide a predictive control of the heating ribbon.

The at least one sensor unit may comprise at least one sensor unit for sensing at least one characteristic of snow on the surface to be heated. The at least one sensor unit may comprise at least one optical sensor unit for sensing at least one environmental characteristic and/or at least one characteristic of the surface to be heated with the heating system. The at least one optical sensor unit may be a spectrometric sensor. The at least one optical sensor unit may sense the at least one characteristic of the snow. The at least one spectrometric sensor may have hyper-spectrometric capabilities analyzing different non-visible light spectrums.

The at least one sensor unit may comprise at least one an image sensor unit. The at least one control unit may be configured to analyze characteristics detected by the at least one sensor unit. In case the at least one sensor unit comprises the at least one image sensor unit, the at least one sensor unit and/or at least one control unit may analyze the data detected by the image sensor by means of image recognition. By doing so, the characteristics of the snow can be determined by means of image recognition. The at least one sensor unit may comprise at least one humidity sensor for detecting the humidity of at least one zone of the surface to be heated.

The at least control unit and/or the at least one sensing unit may be configured to determine temperature changes in the environment based on changes in the resistance of the at least one heating ribbon. The at least one heating ribbon may be embedded in the asphalt or concrete and the electrical resistance of the heating ribbon may be measured. By doing so, the temperature of the entire surface of the surface to be heated can be mapped. Therefore, real-time surface temperature data can be provided, which allows high resolution and precision of the control of the heating of the surface to be heated by the heating system.

The at least one sensing unit may comprise at least one temperature sensor for sensing the air temperature. The at least one sensing unit may further comprise at least one temperature sensor for sensing the temperature of at least one zone of the surface to be heated.

The at least one sensor unit may comprise one or more zone feedback sensors monitoring a particular zone of the surface to be heated. The surface to be heated can be divided into different zones and each zone can be monitored by at least one zone feedback sensor. The at least one zone feedback sensor may be a light sensor for detecting brightness. The at least one zone feedback sensor may be a wind sensor. With the zone feedback sensors particular characteristics of one of the zones of the surface to be heated can be used for controlling the heating operation. For example, the zone feedback sensors can provide information about shaded areas and/or wind characteristics (wind corridors) in the particular zone. Based on the feedback information regarding the particular zone, the power supply and the heating of the respective zone can be controlled exactly based on the data of the zone feedback sensor. Each zone of the surface to be heated may be provided with at least one temperature sensor so that the temperature of each zone of the surface to be heated can be inputted into the control unit.

The at least one control unit may be configured to control the at least one heating ribbon and/or the at least one power supply based on the at least one characteristic sensed by the at least one sensor unit and/or further input data. For example, further input data may be data regarding the weather forecast. The at least one control unit may be configured to use weather forecast data, in order to control the heating of the surface by means of the at least one heating ribbon. The at least one control unit may have access to online databases or online weather models for receiving the weather forecast. Based on the characteristics detected by the at least one sensor unit and further inputted data, the at least one control unit is able to control the at least one heating ribbon in a predictive manner, which may lead to a lower energy consumption of the heating system.

The control unit may be configured to control the at least one heating ribbon such that different zones of the surface to be heated are heated to different surface temperatures. Since the power supply to the heating ribbons arranged in different zones may be controlled by the control unit, it is possible to exactly heat the particular zone according to the heating requirement of the particular zone.

Asphalt pavements in cold regions are often characterized by low-temperature cracking stress. This stress is often caused by an isolated event of fast surface cooling in combination with low-temperature levels. These conditions generate thermally-induced tensile stresses in the asphalt layers, exceeding the material tensile strength, resulting in cracks. With the heating system of the present invention it may be possible to actively mitigate the development of low-temperature cracks. The heating system, i.e. the at least one the control unit, may be configured to identify critical environmental conditions with weather sensing in combination with the environmental and surface sensing as described above. Based on the detected data and sensed characteristics, the heating of the surface can be started to prevent the cracking conditions and, thus, prolonging the longevity of the infrastructure. Moreover, when asphalt is stressed or strained, micocracks develop in the bitumen between the rock particles and at the bitumen-aggregate interfaces. When the stress or strain conditions are released, the micocracks gradually close, and some exhibit rebonding. This rebonding phenomenon is known as healing. By means of the heating with the heating ribbon comprising a heating element made of amorphous material, it may be possible to accelerate the natural capability of the asphalt to heal itself. In other words, due to the radiant heat generated by the at least one heating element, the healing of the asphalt may be accelerated.

The control unit may be configured to classify snowfall with a mathematical model based on one or more of following characteristics and inputs:
a. S - Rate of snowfall (water equivalent),
b. t*a -* Dry-bulb air temperature,
*c. Vair-* Wind speed,
d. t*dp -* Dew point temperature,
e. A_{R} - Snow-free area ratio (0...1),
f. L - Pavement width, and
g. Aₗₜ - Pavement altitude above sea level,
wherein a., b., c., and d., are determined by at least one sensor unit and e., f. and g., are constants.

The snow-free area ratio A_{R} expresses if and how much snow is on the surface to be heated and how much or if the surface to be heated is free from the insulating effect of snow. The case of A_{R} = 1.0 implies snowfall that is instantaneously melted upon contact with the residual water film, i.e., the system melts snow rapidly enough that no partial cover or accumulation occurs. At the other extreme, A_{R} = 0 implies a pavement surface that is covered by enough snow to exclude all evaporation, convection, and radiation heat losses, i.e., the snow melting process operates below this snow blanket. The value of A_{R} is a variable for a snow melting system, representing a desired balance between performance and economy. In general terms, the more critical is the infrastructure being considered, the closer A_{R} should be to unity.

The at least one heating element may be at least in sections ribbon-shaped.The at least heating element is almost immediately able to generate radiant heat with the desired temperature for heating the surfaces. There are no losses for heating up the heating element itself, i.e. the amorphous material itself. The heating ribbon has a low energy consumption which is, inter alia, based on its almost immediate operability. The heating ribbon consumes only energy where and when needed, which allows switching on and switching off the heating ribbon according to the temperature requirements of the surface to be heated. The heating ribbon according to present invention is highly efficient for keeping surfaces snow and ice free by heating them. Thus, the present invention provides an eco-friendly and affordable solution for heating surfaces, which has a relatively small carbon footprint.

The heating ribbon may form reinforcement for concrete or asphalt infrastructure. The heating ribbon including the heating element made of an amorphous material may represent reinforcement for asphalt or concrete infrastructure, since the mechanical characteristics of the heating ribbon are superior of the mechanical characteristics of the asphalt or concrete, since the heating ribbon has a higher elastic modulus and is thermally insensitive.

The amorphous material of the at least one heating element may be electrically conductive. The at least one heating element made of amorphous material may be configured to generate heat immediately, when electric current is passed through it. The at least one heating element is configured to convert electrical energy substantially without losses into radiant heat when electrical energy is passed through it. The at least one heating ribbon may be connectable to an electric power supply. The radiant heat and/or the temperature of the heat generated by the at least one heating ribbon may be controllable based on the at least one electric power supply.

The at least one heating element made of amorphous material may form the core of the at least one heating ribbon. The at least one heating element may have a plate-like and/or rectangular cross section. Thus, the at least one heating element may have a flat cross section. The at least on heating ribbon has a rectangular cross-section. The cross section of the at least one heating element may be adapted to the cross section of the heating ribbon. The at least one heating ribbon may have a predetermined height and a predetermined width or thickness. The at least one heating element may have a predetermined height and width or thickness. The ratio between the height of the heating ribbon and the thickness of the heating element may be in a range, for example, of 100 to 200. The ratio between the width of the heating ribbon and the width of the heating element may be between 1 and 2, in particular in a range of 1,2 to 1,6.

The heating ribbon may comprise at least one cover for covering the at least one heating element. The at least one cover of the heating ribbon may cover the at least one heating element made of amorphous material.

The heating ribbon has at least one wire. The at least one wire may be a power supply return line. The at least one heating ribbon may include at least one ground. The at least one wire and/or the at least one ground may extend along the at least one heating element. In the direction of the width of the heating ribbon, the at least one wire and the at least one ground may be arranged at the sides of the heating element. The at least one heating element may be arranged between the at least one wire and the at least one ground.

The heating ribbon may comprise at least one inner cover for covering at least the at least one heating element and at least one outer cover for covering at least the at least one inner cover and the at least one wire. The at least one inner cover may be made of a plastics material covering the at least one heating element. The heating ribbon may further comprise at least one shell surrounding the at least one inner cover. The at least one shell may be formed of a foil. The at least one outer cover may cover the at least one inner cover and the at least one wire. The at least one outer cover may also cover the at least one ground. The at least one outer cover may be made of a plastics material. The at least one amorphous material may be an amorphous alloy. The amorphous alloy may be based on metal and/or glass.

The present invention further relates to a method for installation of at least one heating ribbon, when building infrastructure. The method includes the following steps:
- providing a first layer of material for building the infrastructure,
- providing the first layer with at least one groove,
- arranging the at least one heating ribbon in the at least one groove, and
- covering the at least one heating ribbon and the first layer with a second layer of material for building the traffic infrastructure.

The heating ribbon may be installed between two or more layers of the material to be used for building the infrastructure. The heating ribbons according to the present invention can be installed in an industrial way between layers of the material for building the infrastructure. The usual way for building the infrastructure like asphalt or concrete roads can be carried out, since only the at least one groove has to be provided and the heating ribbon has to be installed in the groove. With exception of these steps, the usual way for building the infrastructure can be carried out. Therefore, the heating system according to the present invention can be installed fast and easily.

The material for building the traffic infrastructure may be at least not fully hardened or cured, when providing the first layer with the at least one groove. The first layer and the second layer may be of the same material. The first layer and the second layer may be of different materials. The material for building the infrastructure may be asphalt or concrete. For example, the heating ribbon may be installed between asphalt layers and will be put in at least one groove in a first asphalt layer. After installing the heating ribbons in the grooves, asphalt machines can do their standard work without any additional manual interference by providing a second asphalt layer for covering the at least one heating ribbon and the first layer.

The at least one heating ribbon may be arranged in a vertical orientation or horizontal orientation in the first layer and/or the second layer. In the horizontal orientation, the at least one heating element extends at least substantially parallel to the surface to be heated. In the vertical orientation, the at least one heating element of the heating ribbon extends perpendicular to the surface to be heated. Regardless of the orientation of the heating ribbons, the heating ribbon is able to provide radiant heat for heating at least the surface to be heated.

In the following, embodiments of the present invention will be explained with regard to the attached figures, wherein:
- Figure 1: shows a cross-section of a heating ribbon;
- Figure 2: shows the heating system and a road provided with heating ribbons;
- Figure 3: shows a cross-section of a road provided with heating ribbons in horizontal orientation; and
- Figure 4: shows a cross-section of a road provided with heating ribbons in vertical orientation.

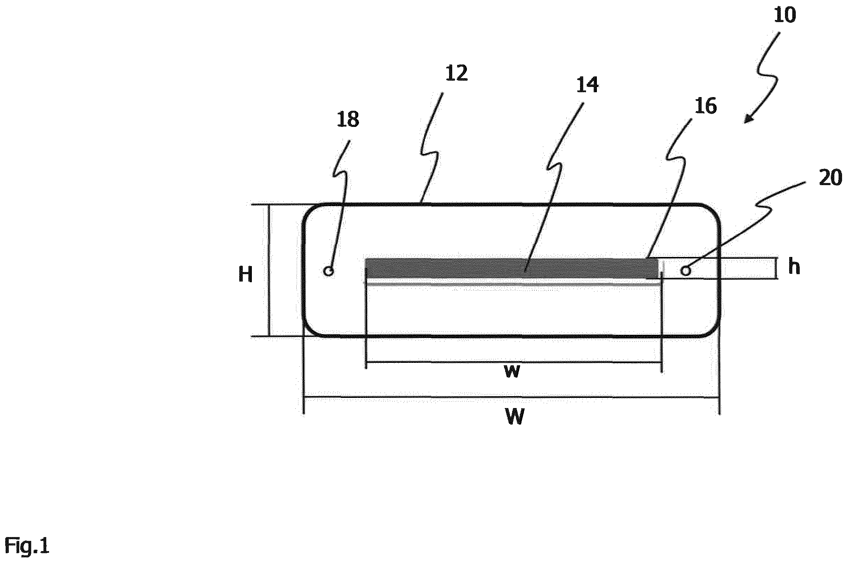

Figure 1 shows a view of cross-section a heating ribbon 10. The heating ribbon 10 has a rectangular cross-section. The heating ribbon 10 comprises an outer or external cover 12 and a heating element 14. The outer cover 12 may be made of a plastics material. The heating element 14 is made of an amorphous material and in particular made of an amorphous alloy. The heating element 14 made of an amorphous alloy forms the core of the heating ribbon 10.

The heating element 14 made of an amorphous alloy has a plate-like and/or rectangular cross-section. The cross section of the heating element 14 is adapted to the cross section of the heating ribbon 10. The height h of the heating element 14 is substantially smaller than the external height H of the heating ribbon 10. In other words, the heating element 14 is substantially thinner than the entire heating ribbon 10. The ratio between the thickness or height H of the heating ribbon 10 and the thickness of the heating element may be in a range, for example, of 50 to 250. The ratio between the width W of the heating ribbon 10 and the width w of the heating element 14 may be between 1 and 2, in particular in a range of 1,2 to 1,6. The width w of the heating element 14 extends at least over 50 % of the width W of heating ribbon 10.

The heating element 14 may be covered by an inner cover 16. The inner cover 16 may be made of a plastics material. The plastics material of the inner cover 16 may differ from the plastics material of the outer cover 12. The outer cover 12 may contact the inner cover 16. The heating ribbon 10 may comprise a foil (not shown), which covers and surrounds the inner cover 16. In this case, the foil is arranged between the outer cover 12 and the inner cover 16.

The heating ribbon 10 comprises a ground wire 18 and a power supply return wire 20. The wires 18 and 20 are arranged at the sides of the heating element 14. The heating element 14 is arranged between the wires 18 and 20. The wires 18 and 20 extend along the heating element 14. The wires 18 and 20 are incorporated into the outer cover 12.

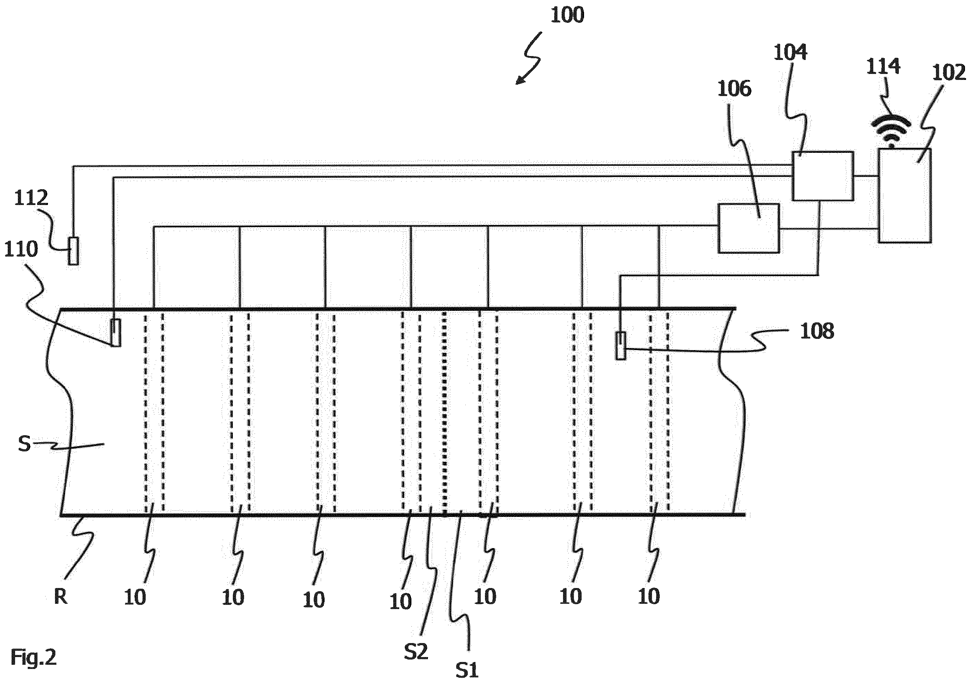

Figure 2 shows a schematic view of a heating system 100. The heating system 100 comprises a plurality of heating ribbons 10. The heating ribbons 10 are arranged in a road R, in order to heat the surface S of the road R. The heating ribbons 10 are shown in dashed lines, since they are arranged below the surface S of the road R.

The heating system 100 comprises a control unit 102, a sensor unit 104 and a power supply unit 106. The sensor unit 104 comprises two surface temperature sensors 108 and 110 for sensing the temperature of the surface S of the road R in two different zones S1, S2 of the surface S. The sensor unit 104 further comprises an air temperature sensor 112 for sensing the temperature of the air in the surroundings of the surface S of the road R. The power supply unit 106 is connected to the heating ribbons 10 for supplying the heating ribbons 10 with power. The sensor unit 104 and the power supply unit 106 are connected to the control unit 102. The control unit 102 controls the power supply unit 106 based on the detected temperatures detected by the surface temperature sensors 108, 110 and the air temperature sensor 112. The control unit 102 uses the detected temperature, in order to control the power supply unit 106 to supply each heating ribbon 10 with a respective amount of power, to generate the radiant heat required for heating the particular surface section or zone S1, S2 to the desired surface temperature.

Each of the heating ribbons 10 can be supplied with a respective amount of power, which amount of power may differ from the amount of power provided to other heating ribbons 10. By doing so, each heating ribbon 10 can generate radiant heat providing a desired surface temperature in one of the zones S1, S2. The surface temperatures in both zones S1, S2 may differ from each other. The control unit 102 can access online databases and/or online whether models for receiving the weather forecast. Therefore, the control unit 102 is connected or connectable to the Internet, which is indicated by the symbol 114.

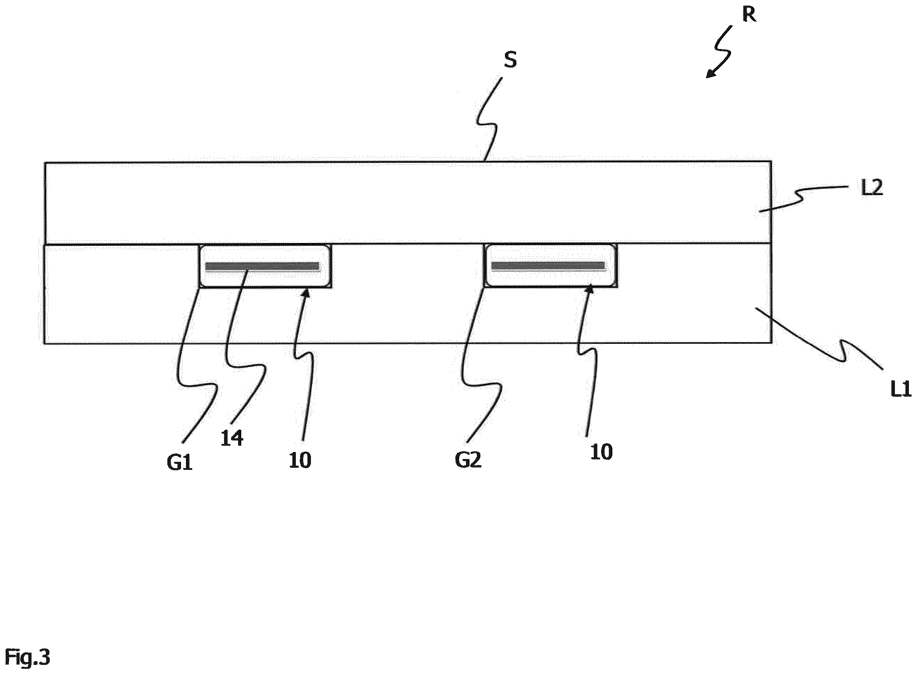

Figure 3 shows a cross-section of a road R provided with the heating ribbons 10. A layer L1 of the material for building the road, for example asphalt, is provided with grooves G1 and G2. In these grooves G1, G2, the heating ribbons 10 are arranged. Then, a second layer L2 is provided for covering the first layer L1 and the heating ribbons 10. The second layer L2 may be an asphalt layer as well. The heating ribbons 10 generate radiant heat for heating the surface S of the road R. The heating ribbons 10 are arranged in horizontal orientation. The grooves G1 and G2 have shape corresponding to the horizontal orientation of the heating ribbons 10.

The heating ribbons 10 may, for example, be installed between two asphalt layers L1 and L2 and will be put in the grooves G1 and G2 in the first asphalt layer L1. After installing the heating ribbons 10 in the grooves G1 and G2, asphalt machines (not shown) can do their standard work by providing a second asphalt layer L2 for covering the heating ribbons 10 and the first layer L1, without any additional manual interference.

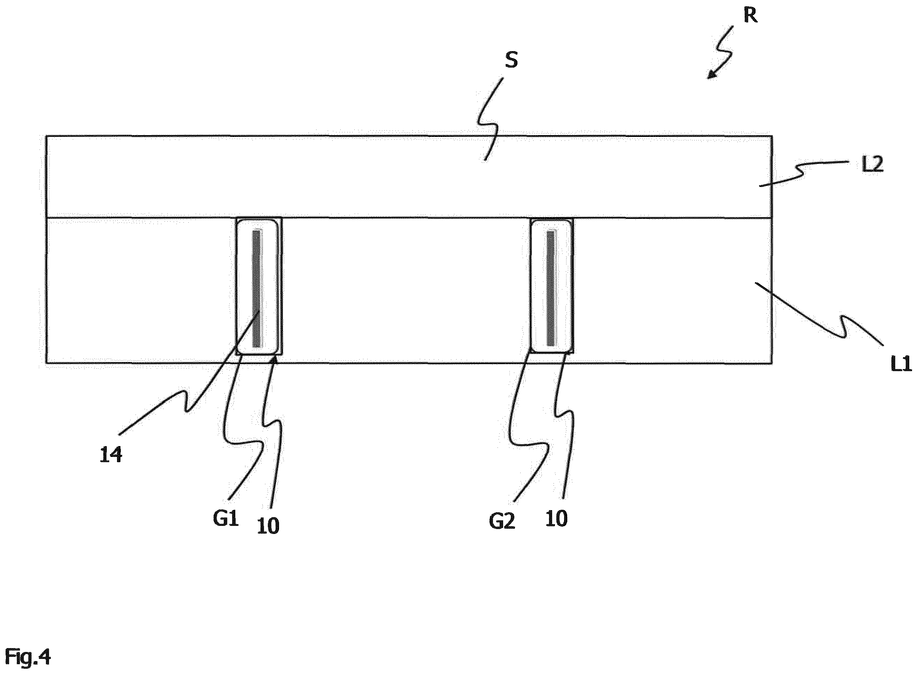

Figure 4 shows a cross-section of a road R provided with the heating ribbons 10. A layer L1 of the material for building the road is provided with grooves G1 and G2. In these grooves G1, G2, the heating ribbons 10 are arranged. Compared to figure 3, the heating ribbons 10 are arranged in a vertical orientation in the grooves G1, G2. In other words, the heating ribbons 10 have been rotated about 90° from the horizontal orientation in figure 3 into the vertical orientation in figure 4. In the horizontal orientation of figure 3, the heating element 14 extends at least substantially parallel to the surface S to be heated. In the vertical orientation of figure 4, the heating element 14 extends perpendicular to the surface S to be heated. The grooves G1 and G2 have shape corresponding to the vertical orientation of the heating ribbons 10.

A second layer L2 is provided for covering the first layer L1 and the heating ribbons 10 arranged in the vertical position. In the vertical orientation, the heating ribbons 10 generate radiant heat for heating the S of the road R.

The heating ribbons 10 including the heating element 14 made of amorphous material are able to generate radiant heat almost immediately, when supplied with power. The heating ribbons 10 and in particular the heating element 14 made of amorphous material does not need time to heat up itself, but rather generates immediately radiant heat for heating its surroundings. The heating system 100 can therefore react rapidly on changes in the environment of the heating system and or on changes of the heating requirements of the surface to be heated, which may be determined based on inputted data regarding the weather forecast and/or detected characteristics of the surface to be heated and/or the environment. This leads to a very low energy consumption of the heating system 100 due to its ability of "on demand" heating.

## Claims

1. Heating system (100) for heating asphalt or concrete surfaces (S) of infrastructure, comprising:
at least one heating ribbon (10), wherein the heating ribbon (10) comprises at least one heating element (14) for generating radiant heat, wherein the at least one heating element (14) is made of an amorphous material,
at least one power supply (106) for supplying power to the at least one heating ribbon (10),
at least one sensor unit (104) for sensing at least one environmental characteristic and/or at least one characteristic of at least one zone of the surface (S) to be heated with the heating system (100), wherein the at least one sensing unit (104) comprises at least one temperature sensor for sensing the air temperature (112) and at least one temperature sensor (108, 110) for sensing the temperature of at least one zone of the surface (S) to be heated,
at least one control unit (102) that is configured to determine the heating demand of the at least one zone of the surface (S) to be heated based on the at least one characteristic sensed by the at least one sensor unit (104), wherein the at least one control unit (102) is configured to control the at least one power supply (106) based on the determined heating demand of the at least one zone of the surface (S) to be heated,
**characterized by**
the at least one power supply unit (106) comprising at least one power modulation unit configured to control the amount of power supplied to the at least one heating ribbon (10),
wherein at least one power modulation unit is configured to power the at least one heating element (14) of the heating ribbon (10) with any value between 0%-100% of the maximum power of the heating ribbon (10) in order to power the at least one heating element (14) of the heating ribbon (10) with the precise amount of power to reach the desired surface temperature in the at least one zone of the surface (S) to be heated.

2. Heating system (100) according to claim 1,
wherein the at least one control unit (102) is configured to determine the heating demand based on further input data.

3. Heating system (100) according to claim 1 or 2,
wherein the control unit (102) is configured to control at least the at least one heating ribbon (10) such that different zones (S1, S2) of the surface (S) to be heated are heatable with different temperatures.

4. Heating system according to one of claims 1 to 3,
wherein the at least one sensor unit (106) comprises at least one optical sensor unit for sensing at least one environmental characteristic and/or at least one characteristic of the surface (S) to be heated with the heating system.

5. Heating system according to one of the claims 1 to 4,
wherein the at least one sensing unit (104) comprises at least one imaging sensor unit for sensing at least one environmental characteristic and/or at least one characteristic of the surface (S) to be heated with the heating system.

6. Heating system according to one of the claims 1 to 5,
wherein the at least control unit (102) and/or the at least one sensing unit (106) is configured to determine the temperature changes in the environment based on changes in the resistance of the at least one heating ribbon (10).

7. Heating system (100) according to one of the claims 2 to 6,
wherein the at least one control unit (102) is configured to request or to receive data of weather forecast models.

8. Heating system (100) according to one of the claims 1 to 7,
wherein the control unit (102) is configured to classify snowfall with a mathematical model based on one or more of the following characteristics and inputs:
a. S - Rate of snowfall (water equivalent),
b. t*a* - Dry-bulb air temperature,
c. *Vair -* Wind speed,
d. t*dp* - Dew point temperature,
e. A_{R} - Snow-free area ratio (0...1),
f. L - Pavement width, and
g. Aₗₜ - Pavement altitude above sea level
wherein a., b., c., and d. are determined by the at least one sensor unit (104) and e.,
f. and g. are constants.

## Patentansprüche

1. Heizsystem (100) zum Beheizen von Asphalt- oder Betonflächen (S) von Infrastruktur, das umfasst:
wenigstens ein Heizband (10), wobei das Heizband (10) wenigstens ein Heizelement (14) zum Erzeugen von Strahlungswärme umfasst, wobei das wenigstens eine Heizelement (14) aus einem amorphen Material gefertigt ist,
wenigstens eine Stromversorgung (106) zur Versorgung des wenigstens einen Heizbands (10) mit Strom,
wenigstens eine Sensoreinheit (104) zum Erfassen wenigstens einer Umgebungseigenschaft und/oder wenigstens einer Eigenschaft wenigstens einer Zone der mit dem Heizsystem (100) zu beheizenden Fläche (S), wobei die wenigstens eine Sensoreinheit (104) wenigstens einen Temperatursensor zum Erfassen der Lufttemperatur (112) und wenigstens einen Temperatursensor (108, 110) zum Erfassen der Temperatur wenigstens einer Zone der zu beheizenden Fläche (S) umfasst,
wenigstens eine Steuereinheit (102), die zum Ermitteln des Heizbedarfs der wenigstens einen Zone der zu beheizenden Fläche (S) basierend auf der wenigstens einen von der wenigstens einen Sensoreinheit (104) erfassten Eigenschaft eingerichtet ist, wobei die wenigstens eine Steuereinheit (102) zum Steuern der wenigstens einen Stromversorgung (106) basierend auf dem ermittelten Heizbedarf der wenigstens einen Zone der zu beheizenden Fläche (S) eingerichtet ist,
**dadurch gekennzeichnet, dass**
die wenigstens eine Stromversorgungseinheit (106) wenigstens eine Strommodulationseinheit umfasst, die zum Steuern der dem wenigstens einen Heizband (10) zugeführten Strommenge eingerichtet ist,
wobei die wenigstens eine Strommodulationseinheit dazu eingerichtet ist, das wenigstens eine Heizelement (14) des Heizbands (10) mit Strom mit einem Wert zwischen 0 % und 100 % des maximalen Stroms des Heizbands (10) zu versorgen, um das wenigstens eine Heizelement (14) des Heizbands (10) genau mit der Strommenge zu versorgen, die erforderlich ist, um die gewünschte Flächentemperatur in der wenigstens einen Zone der zu beheizenden Fläche (S) zu erreichen.

2. Heizsystem (100) nach Anspruch 1,
wobei die wenigstens eine Steuereinheit (102) dazu eingerichtet ist, den Heizbedarf basierend auf weiteren Eingangsdaten zu ermitteln.

3. Heizsystem (100) nach Anspruch 1 oder 2,
wobei die Steuereinheit (102) dazu eingerichtet ist, wenigstens das wenigstens eine Heizband (10) derart zu steuern, dass verschiedene Zonen (S1, S2) der zu beheizenden Fläche (S) mit unterschiedlichen Temperaturen beheizbar sind.

4. Heizsystem nach einem der Ansprüche 1 bis 3,
wobei die wenigstens eine Sensoreinheit (106) wenigstens eine optische Sensoreinheit zum Erfassen wenigstens einer Umgebungseigenschaft und/oder wenigstens einer Eigenschaft der mit dem Heizsystem zu beheizenden Fläche (S) umfasst.

5. Heizsystem nach einem der Ansprüche 1 bis 4,
wobei die wenigstens eine Sensoreinheit (104) wenigstens eine Bildsensoreinheit zum Erfassen wenigstens einer Umgebungseigenschaft und/oder wenigstens einer Eigenschaft der mit dem Heizsystem zu beheizenden Fläche (S) umfasst.

6. Heizsystem nach einem der Ansprüche 1 bis 5,
wobei die wenigstens eine Steuereinheit (102) und/oder die wenigstens eine Sensoreinheit (106) dazu eingerichtet sind, Temperaturänderungen in der Umgebung basierend auf Änderungen des Widerstands des wenigstens einen Heizbands (10) zu ermitteln.

7. Heizsystem (100) nach einem der Ansprüche 2 bis 6,
wobei die wenigstens eine Steuereinheit (102) dazu eingerichtet ist, Daten von Wettervorhersagemodellen anzufordern oder zu empfangen.

8. Heizsystem (100) nach einem der Ansprüche 1 bis 7,
wobei die Steuereinheit (102) dazu eingerichtet ist, Schneefall anhand eines Rechenmodells basierend auf einer oder mehreren der folgenden Eigenschaften und Eingaben zu klassifizieren:
a. S - Schneefallrate (Wasseräquivalent),
b. t*a* - Trockenkugeltemperatur der Luft,
c. V*air* - Windgeschwindigkeit,
d. t*dp* - Taupunkttemperatur,
e. A_{R} - Anteil der schneefreien Fläche (0...1),
f. L - Fahrbahnbreite und
g. Aₗₜ - Höhe der Fahrbahn über dem Meeresspiegel,
wobei a., b., c. und d. durch die wenigstens eine Sensoreinheit (104) ermittelt werden und e.,
f. und g. Konstanten sind.

## Revendications

1. Système de chauffage (100) pour chauffer les surfaces en asphalte ou en béton (S) d'infrastructures, comprenant :
au moins un ruban chauffant (10), dans lequel le ruban chauffant (10) comprend au moins un élément chauffant (14) pour générer de la chaleur rayonnante, dans lequel l'au moins un élément chauffant (14) est constitué d'un matériau amorphe,
au moins une alimentation électrique (106) pour alimenter l'au moins un ruban chauffant (10),
au moins une unité de capteur (104) pour détecter au moins une caractéristique environnementale et/ou au moins une caractéristique d'au moins une zone de la surface (S) à chauffer au moyen du système de chauffage (100), l'au moins une unité de capteur (104) comprenant au moins un capteur de température pour détecter la température de l'air (112) et au moins un capteur de température (108, 110) pour détecter la température d'au moins une zone de la surface (S) à chauffer,
au moins une unité de commande (102) qui est configurée pour déterminer la demande de chauffage de l'au moins une zone de la surface (S) à chauffer sur la base de l'au moins une caractéristique détectée par l'au moins une unité de capteur (104), l'au moins une unité de commande (102) étant configurée pour commander l'au moins une alimentation électrique (106) sur la base de la demande de chauffage déterminée de l'au moins une zone de la surface (S) à chauffer,
**caractérisé par**
l'au moins une unité d'alimentation électrique (106) comprenant au moins une unité de modulation de puissance configurée pour commander la quantité de puissance fournie à l'au moins un ruban chauffant (10),
dans lequel au moins une unité de modulation de puissance est configurée pour alimenter l'au moins un élément chauffant (14) du ruban chauffant (10) avec une valeur comprise entre 0 % et 100 % de la puissance maximale du ruban chauffant (10) afin d'alimenter l'au moins un élément chauffant (14) du ruban chauffant (10) avec la quantité précise de puissance pour atteindre la température de surface souhaitée dans l'au moins une zone de la surface (S) à chauffer.

2. Système de chauffage (100) selon la revendication 1,
dans lequel l'au moins une unité de commande (102) est configurée pour déterminer la demande de chauffage sur la base d'autres données d'entrée.

3. Système de chauffage (100) selon la revendication 1 ou 2,
dans lequel l'unité de commande (102) est configurée pour commander au moins ledit au moins un ruban chauffant (10) de sorte que différentes zones (S1, S2) de la surface (S) à chauffer puissent être chauffées à des températures différentes.

4. Système de chauffage selon l'une des revendications 1 à 3,
dans lequel l'au moins une unité de capteur (106) comprend au moins une unité de capteur optique pour détecter au moins une caractéristique environnementale et/ou au moins une caractéristique de la surface (S) à chauffer avec le système de chauffage.

5. Système de chauffage selon l'une des revendications 1 à 4,
dans lequel l'au moins une unité de capteur (104) comprend au moins une unité de détection par imagerie pour détecter au moins une caractéristique environnementale et/ou au moins une caractéristique de la surface (S) à chauffer au moyen du système de chauffage.

6. Système de chauffage selon l'une des revendications 1 à 5,
dans lequel l'au moins une unité de commande (102) et/ou l'au moins une unité de détection (106) est configurée pour déterminer les variations de température dans l'environnement en fonction de variations dans la résistance de l'au moins un ruban chauffant (10).

7. Système de chauffage (100) selon l'une des revendications 2 à 6,
dans lequel l'au moins une unité de commande (102) est configurée pour demander ou recevoir des données de modèles de prévisions météorologiques.

8. Système de chauffage (100) selon l'une des revendications 1 à 7,
dans lequel l'unité de commande (102) est configurée pour classer les chutes de neige à l'aide d'un modèle mathématique basé sur une ou plusieurs des caractéristiques et entrées suivantes :
a. S - Taux de chute de neige (équivalent en eau),
b. t*a* - Température de l'air au bulbe sec,
c. V*air* - Vitesse du vent,
d. t*dp* - Température du point de rosée,
e. A_{R} - Rapport de surface sans neige (0 ... 1),
f. L - Largeur de la chaussée, et
g. Aₗₜ - Altitude de la chaussée par rapport au niveau de la mer
dans lesquelles a., b., c. et d. sont déterminés par l'au moins une unité de capteur (104) et e., f. et g. sont des constantes.
